(19) Europäisches Patentamt / European Patent Office / Office européen des brevets

(11) **EP 3 383 084 B1**

(12) **EUROPEAN PATENT SPECIFICATION**

(45) Date of publication and mention of the grant of the patent:
**14.10.2020 Bulletin 2020/42**

(51) Int Cl.:
**H04W 16/00** *(2009.01)*   **H04L 5/00** *(2006.01)*

(21) Application number: **15911195.4**

(22) Date of filing: **25.12.2015**

(86) International application number:
**PCT/CN2015/098984**

(87) International publication number:
**WO 2017/107198 (29.06.2017 Gazette 2017/26)**

(54) **METHOD, DEVICE AND SYSTEM FOR TRANSMITTING AND RECEIVING INFORMATION**

VERFAHREN, VORRICHTUNG UND SYSTEM ZUM SENDEN UND EMPFANGEN VON INFORMATIONEN

PROCÉDÉ, DISPOSITIF ET SYSTÈME POUR TRANSMETTRE ET RECEVOIR DES INFORMATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.10.2018 Bulletin 2018/40**

(73) Proprietor: **Huawei Technologies Co., Ltd.**
**Longgang District**
**Shenzhen, Guangdong 518129 (CN)**

(72) Inventor: **CHENG, Yan**
**Shenzhen**
**Guangdong 518129 (CN)**

(74) Representative: **Pfenning, Meinig & Partner mbB**
**Patent- und Rechtsanwälte**
**Theresienhöhe 11a**
**80339 München (DE)**

(56) References cited:
EP-A1- 2 816 752    WO-A1-2012/167431
WO-A1-2015/145214    CN-A- 101 015 149
CN-A- 102 843 216    CN-A- 102 868 514
US-A1- 2014 126 549

## Description

## TECHNICAL FIELD

The present invention relates to the field of communications technologies, and in particular, to a method, an apparatus, and a system for sending and receiving information.

## BACKGROUND

Currently, a Long Term Evolution (Long Term Evolution, LTE for short) system includes two frame structures: One is applicable to frequency division duplex (Frequency Division Duplex, FDD for short), and the other is applicable to time division duplex (Time Division Duplex, TDD for short). A length of each subframe (Subframe) in the two frame structures is 1 ms.

To support hybrid automatic retransmission in an LTE system, a terminal needs to feed back a hybrid automatic repeat request (Hybrid Automatic Repeat Request, HARQ for short) acknowledgment of physical downlink shared channel (Physical Downlink Shared Channel, PDSCH for short) transmission to a base station by using a physical uplink control channel (Physical Uplink Control Channel, PUCCH for short) and a physical uplink shared channel (Physical Uplink Shared Channel, PUSCH for short). The hybrid automatic repeat request acknowledgment is denoted as HARQ-ACK, or may be simply referred to as ACK (Acknowledgment, acknowledgment)/NACK (Negative Acknowledgement, negative acknowledgement). The terminal needs to receive a HARQ-ACK corresponding to the PUSCH by using a physical hybrid automatic repeat request indicator channel (Physical Hybrid-ARQ Indicator Channel, PHICH for short).

In an existing LTE system, for FDD, a HARQ-ACK corresponding to a PDSCH transmitted in a downlink subframe n-4 (n≥4, n is an integer) is fed back in an uplink subframe n. For TDD, a HARQ-ACK corresponding to a PDSCH transmitted in a downlink subframe n-k is fed back in the uplink subframe n, where a value of k is greater than or equal to 4. That is, the HARQ-ACK can be fed back only after at least four subframes. Therefore, a round-trip time (Round-Trip Time, RTT for short) of a HARQ is relatively large, there is a large delay on a user plane, and a low-latency service cannot be provided.

In EP 2 816 752 A1 a retransmission method for a time division duplexing self-adaptive frame structure, and a network side device relate to a technology of dynamically allocating uplink and downlink sub-frames in an LTE-advance (3GPP Release11) TDD communication system. The method comprises: during transmission of a TDD self-adaptive frame, for an uplink subframe, if a frame structure, of which an RTT period of PHICH and PUSCH of the uplink sub-frame is 10 ms, corresponding to the uplink sub frame is found in 7 types of defined frame structures, then sending PHICH data on a corresponding Downlink sub-frame in the found frame structure, and sending retransmission data on the corresponding uplink sub-frame in the found frame structure. The solution ensures HARQ compatibility of an uplink data channel of R10UE. In addition, A/N feedback of the PDSCH is configured according to the uplink A/N resolution, thereby improving retransmission performance.

## SUMMARY

According to the present application, the above objects are solved by the claimed matter according to the independent claims. Further improvements are provided by the claimed matter according to the dependent claims. Embodiments of the present invention provide a method, an apparatus, and a system for sending and receiving information, to reduce a latency and improve user experience.

According to the method, apparatus, and system provided in the embodiments of the present invention, the user equipment may determine the subframe structure of the first subframe according to the downlink information sent by the base station, further determine the frame structure of the serving cell according to the subframe structure of the first subframe, and transmit information in the serving cell according to the determined frame structure of the serving cell. The base station may adjust the frame structure of the first subframe by using dynamic signaling. Therefore, the base station may determine a used frame structure of the first subframe according to an actual service requirement. For example, in a case of a low-latency service, a determined subframe structure of a first subframe can meet a requirement of the low-latency service, and therefore when the user equipment transmits information in the serving cell according to the determined frame structure of the serving cell, a latency can be reduced and user experience can be improved.

## BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.

FIG. 1 is a flowchart of a method for sending and receiving information according to an embodiment of the present invention;
FIG. 2 is a schematic diagram of composition of a type of first subframe according to an embodiment of the present invention;

FIG. 3 is a flowchart of another method for sending and receiving information according to an embodiment of the present invention;

FIG. 4 is a schematic diagram of a structure of user equipment according to an embodiment of the present invention;

FIG. 5 is a schematic diagram of another structure of user equipment according to an embodiment of the present invention;

FIG. 6 is a schematic diagram of a structure of a base station according to an embodiment of the present invention; and

FIG. 7 is a schematic diagram of another structure of a base station according to an embodiment of the present invention.

**DESCRIPTION OF EMBODIMENTS**

The following clearly describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

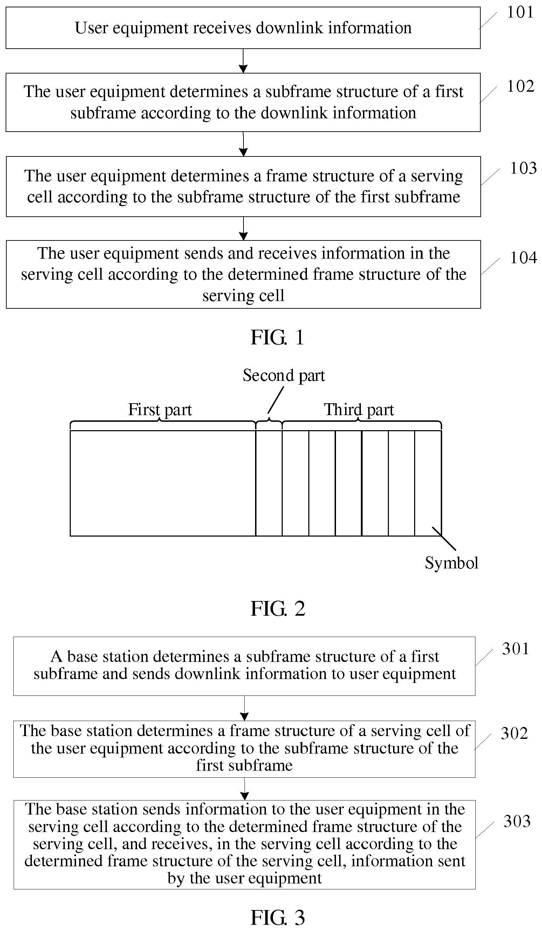

An embodiment of the present invention provides a method for sending and receiving information, as shown in FIG. 1. The method includes the following steps.

101: User equipment receives downlink information.

The method provided in this embodiment of the present invention is applicable to an LTE system or an LTE-Advanced system, for example, is applicable to a single-carrier scenario and a carrier aggregation scenario in the LTE system or the LTE-Advanced system.

Specifically, the downlink information may be downlink information that is sent by a base station and that is used to indicate a subframe structure of a first subframe, so that the user equipment determines the subframe structure of the first subframe according to the downlink information.

102: The user equipment determines a subframe structure of a first subframe according to the downlink information.

Optionally, the subframe structure of the first subframe is different when the downlink information corresponds to a different value.

103: The user equipment determines a frame structure of a serving cell (serving cell) according to the subframe structure of the first subframe.

The user equipment further determines the frame structure of the serving cell according to the subframe structure of the first subframe. For example, specifically, the user equipment may further determine a subframe structure of each subframe in a radio frame of the serving cell.

It should be noted that, the serving cell in all embodiments of the present invention may be a serving cell configured by a network side device for the user equipment, or may be a serving cell that serves the user equipment, or may be a serving cell accessed by the user equipment. The serving cell in this embodiment of the present invention may also be referred to as a component carrier (component carrier). The serving cell in this embodiment of the present invention may be a primary serving cell (Primary serving cell) or a secondary serving cell (Secondary serving cell) of the user equipment.

104: The user equipment sends and receives information in the serving cell according to the determined frame structure of the serving cell.

The user equipment transmits information in the serving cell according to the determined frame structure of the serving cell. The information transmission herein may refer to all information transmission performed based on the frame structure. For example, downlink may include PDSCH transmission, physical downlink control channel (Physical Downlink Control Channel, PDCCH for short) transmission, PHICH transmission, downlink reference signal transmission, and the like. Uplink may include PUSCH transmission, PUCCH transmission, uplink reference signal transmission, and the like. PDSCH-related transmission and PUSCH transmission are usually performed according to specific hybrid automatic repeat request timing (HARQ timing).

According to the method provided in this embodiment of the present invention, the user equipment may determine the subframe structure of the first subframe according to the downlink information sent by the base station, further determine the frame structure of the serving cell according to the subframe structure of the first subframe, and transmit information in the serving cell according to the determined frame structure of the serving cell. The base station may adjust the frame structure of the first subframe by using dynamic signaling. Therefore, the base station may determine a used frame structure of the first subframe according to an actual service requirement. For example, in a case of a low-latency service, a determined subframe structure of a first subframe can meet a requirement of the low-latency service, and therefore when the user equipment transmits information in the serving cell according to the determined frame structure of the serving cell, a latency can be reduced and user experience can be improved.

Optionally, the downlink information may be carried in a downlink control information format. Optionally, one downlink control information format shown in the following examples may be used in this embodiment of the present invention:

Example 1:

The downlink control information format is a downlink control information format 1C, or a quantity of bits corresponding to the downlink control information format is the same as a quantity of bits corresponding to the downlink control information format 1C.

Optionally, the downlink control information format includes I pieces of downlink information, and each of the I pieces of downlink information corresponds to N bits, where I≥1, N≥1, and I and N are both integers.

Optionally, the downlink control information format includes a subframe structure indication field, the subframe structure indication field includes I pieces of downlink information, and each of the I pieces of downlink information corresponds to N bits, where I≥1, N≥1, and I and N are both integers. The subframe structure indication field may also be referred to as an uplink length indication field.

Optionally, a value of I is $I = \left\lfloor \dfrac{L_{format\ 1C}}{N} \right\rfloor$,

where $L_{format\ 1C}$ is equal to a quantity of bits corresponding to the downlink control information format 1C when the downlink control information format 1C is used to schedule one physical downlink shared channel code word.

Optionally, a value of I is equal to a quantity of first subframes in one radio frame. Further, the I pieces of downlink information have respective numbers, and the numbers of the I pieces of downlink information are in a one-to-one correspondence to a first subframe in the radio frame. For example, downlink information numbered 0 corresponds to the first first subframe in one radio frame, and downlink information numbered 1 corresponds to the second first subframe in the radio frame.

Optionally, the I pieces of downlink information may correspond to different serving cells. Further, a number of downlink information corresponding to a serving cell may be configured by using higher layer signaling. Specifically, one piece of downlink information may correspond to one serving cell, or one piece of downlink information may correspond to a plurality of serving cells. This is not limited in this embodiment of the present invention.

Optionally, the I pieces of downlink information correspond to different first subframes, or some of the I pieces of downlink information correspond to different first subframes of a same serving cell.

Optionally, when the downlink control information format is used to indicate a subframe structure, or when the downlink control information format is used to indicate an uplink length, the downlink control information format includes the following information:

1. Uplink length indication

Downlink information 1, downlink information 2, ..., downlink information G

The downlink information may also be replaced by an uplink length number. Each piece of downlink information corresponds to N bits, and $G = \left\lfloor \dfrac{L_{format}}{N} \right\rfloor$,

where $L_{format}$ is a quantity of bits corresponding to the downlink control information format, G≥1, and G is an integer.

Optionally, in this example, the downlink control information format may be scrambled by using a specific radio network temporary identifier (Radio Network Temporary Identifier, RNTI for short). The specific RNTI may be used to identify that the downlink control information format is used to indicate a subframe structure.

Optionally, in this example, the downlink control information format may be carried on a physical downlink control channel or an enhanced physical downlink control channel. Further, the downlink control information format is carried in common search space of a downlink control channel.

Optionally, in this example, the downlink information may be carried in a radio frame 1, the first subframe belongs to a radio frame 2. Further, the radio frame 1 may include only one radio frame, the radio frame 2 may include M consecutive radio frames, where M≥1, and M is an integer. A value of M may be predefined, semi-statically configured, or dynamically indicated. When the value of M is dynamically indicated, indication information used to indicate the value of M may also be carried in a downlink control information format. Further, the first radio frame in the radio frame 2 is the first radio frame after the radio frame 1, or the first radio frame in the radio frame 2 is the radio frame 1. Further, the downlink information is carried in R subframes in the radio frame 1, the R subframes include a subframe 0 in the radio frame 1, where R≥1 and R is an integer.

Optionally, the first subframe is one or more of a subframe 3, a subframe 4, a subframe 8, or a subframe 9 in each radio frame in the radio frame 2.

Optionally, the subframe structure of the first subframe may be indicated by using a value of the downlink information.

In this example, the downlink information carried in the radio frame 1 indicates the subframe structure of the first subframe in the radio frame 2. A frame structure of a serving cell may be dynamically changed, so that the frame structure of the serving cell can match an actual service requirement.

In this example, a value of R may be greater than 1. In this case, downlink information is transmitted in a plurality of subframes, and transmission performance of the downlink information can be further improved.

Example 2:

The downlink control information format is used to schedule a PDSCH, and the first subframe is a subframe for transmitting the PDSCH.

Optionally, the downlink information is carried in the downlink control information format, the downlink control information format is used to schedule the PDSCH, and the first subframe is a subframe for transmitting HARQ-ACK information corresponding to the PDSCH.

In this example, the downlink control information format of the PDSCH is scheduled to indicate a subframe structure of the subframe for transmitting the PDSCH and/or the HARQ-ACK corresponding to the PDSCH. The subframe structure of the first subframe may be dynamically indicated by using the downlink information. Therefore, the subframe structure may be adjusted according to an actual service, and a frame structure of a serving cell can match an actual service requirement.

Example 3:

The downlink control information format is used to schedule a PUSCH, and the first subframe is a subframe for transmitting the PUSCH.

Optionally, the downlink information is carried in the downlink control information format, the downlink control information format is used to schedule the PUSCH, and the first subframe is a subframe for transmitting HARQ-ACK information corresponding to the PUSCH.

In this example, the downlink control information format of the PUSCH is scheduled to indicate a subframe structure of the subframe for transmitting the PUSCH and/or the HARQ-ACK corresponding to the PUSCH, so that a frame structure of a serving cell can match an actual service requirement.

Specifically, a correspondence between a value corresponding to the downlink information and the subframe structure of the first subframe may be a correspondence described in any one of the following four examples:

Example 1:

When the downlink information corresponds to a first value, the first subframe is a default subframe, the subframe structure of the first subframe is a subframe structure of the default subframe, and the default subframe is a downlink subframe or an uplink subframe.

When the downlink information corresponds to a second value, the subframe structure of the first subframe includes three parts. A first part is a symbol used for downlink transmission, a second part is a guard period (Guard Period, GP for short), and a third part is a symbol used for uplink transmission.

Specifically, the downlink information may correspond to two bits. In this case, the first value may be 00, and the second value may be 01; or the first value is 10, and the second value is 11. The downlink information may correspond to one bit. In this case, the first value may be 0 (or 1), and the second value may be 1 (or 0).

When the downlink information corresponds to the first value, the first subframe is the default subframe. The default subframe may be a downlink subframe, that is, all symbols in the default subframe are used for downlink transmission. The default subframe may be an uplink subframe, that is, all symbols in the default subframe are used for uplink transmission. The subframe structure of the default subframe may be a predefined subframe structure.

Specifically, after it is determined that the first subframe is the default subframe, whether the default subframe is an uplink subframe or a downlink subframe may further be determined according to an uplink-downlink configuration.

When the downlink information corresponds to the second value, optionally, a quantity of symbols of the third part may be 5 or 6. As shown in FIG. 2, FIG. 2 shows a type of first subframe. A quantity of symbols of a third part of the first subframe is 6, and a quantity of symbols of a second part is 1. A quantity of symbols of a first part is equal to a total quantity of symbols of the first subframe minus the quantity of symbols of the third part and minus the quantity of symbols of the second part. Alternatively, the second part of the first subframe may include a plurality of symbols. An example in which the second part includes one symbol is described in this embodiment of the present invention.

Optionally, the quantity of symbols of the third part may be configured by using higher layer signaling or predefined.

When the downlink information corresponds to the second value, the subframe structure corresponding to the first subframe may be referred to as a new subframe structure type 1. The new subframe structure type 1 includes both a symbol used for downlink transmission and a symbol used for uplink transmission, so that a transmission opportunity can be quickly obtained for downlink transmission or uplink transmission and a user plane delay can be reduced. On the other hand, when the quantity of symbols of the third part is 5 or 6, in the new subframe structure type 1, the quantity of symbols occupied by the first part and the third part is approximately equal to a length corresponding to a half subframe. If downlink data transmission is performed in the first part or uplink data transmission is performed in the third part, short-transmission time interval (Transmission Time Interval, TTI for short) transmission can be implemented. The short-TTI transmission can reduce data processing time and a user plane delay.

In this example, the base station indicates the subframe structure of the first subframe to the user equipment by using the downlink information, so that the user equipment can transmit information by using the subframe structure of the default subframe or the new subframe structure type 1. If the default subframe is a downlink subframe, when the base station determines that there is an uplink low-latency service, the base station may instruct, by using the downlink information, the user equipment to transmit data by using the new subframe structure type 1. Therefore, a transmission opportunity can be quickly obtained for the uplink low-latency service, and because short-TTI transmission is used, the user plane delay can be reduced. In view of the above, the base station and the user equipment can determine the frame structure of the serving cell according to an actual service requirement, and can provide a low-latency service.

It should be noted that, in all embodiments of the present invention, a ratio of the quantity of symbols of the three parts included in the first subframe is not limited.

Example 2:

When the downlink information corresponds to a third value, the first subframe is a default subframe, the subframe structure of the first subframe is a subframe structure of the default subframe, and the default subframe is a downlink subframe or an uplink subframe.

When the downlink information corresponds to a fourth value, the subframe structure of the first subframe includes three parts. A first part is a symbol used for downlink transmission, a second part is a guard period, a third part is a symbol used for uplink transmission, and a quantity of symbols corresponding to the third part is a first quantity of symbols.

When the downlink information corresponds to a fifth value, the subframe structure of the first subframe includes three parts. A first part is a symbol used for downlink transmission, a second part is a guard period, a third part is a symbol used for uplink transmission, and a quantity of symbols corresponding to the third part is a second quantity of symbols.

When the downlink information corresponds to a sixth value, the subframe structure of the first subframe includes three parts. A first part is a symbol used for downlink transmission, a second part is a guard period, a third part is a symbol used for uplink transmission, and a quantity of symbols corresponding to the third part is a third quantity of symbols.

The downlink information may be carried in a downlink control information format. The downlink information may correspond to two bits. In this case, the third value may be 00, the fourth value may be 01, the fifth value is 10, and the sixth value may be 11.

It should be noted that when the downlink information corresponds to the sixth value, the sixth value is meaningless and is a reserved bit.

Optionally, the first quantity of symbols is 3, the second quantity of symbols is 6, and the third quantity of symbols is 9.

Optionally, the first quantity of symbols, the second quantity of symbols, and the third quantity of symbols may be configured by using higher layer signaling or may be predefined.

When the downlink information corresponds to the third value, the first subframe is the default subframe.

The default subframe may be a downlink subframe, that is, all symbols in the default subframe are used for downlink transmission. The default subframe may be an uplink subframe, that is, all symbols in the default subframe are used for uplink transmission. The subframe structure of the default subframe may be a predefined subframe structure.

In this example, after it is determined that the first subframe is the default subframe, whether the default subframe is an uplink subframe or a downlink subframe may further be determined according to an uplink-downlink configuration.

Specifically, when the downlink information corresponds to the fourth value, the fifth value, or the sixth value, the subframe structure corresponding to the first subframe may be referred to as a new subframe structure type 2. The new subframe structure type 2 includes both a symbol used for downlink transmission and a symbol used for uplink transmission, so that a transmission opportunity can be quickly obtained for downlink transmission or uplink transmission and a user plane delay can be reduced. On the other hand, the fourth value, the fifth value, and the sixth value correspond to different quantities of symbols of the third part, so that an uplink transmission length in the first subframe may change according to an actual service requirement to better match an actual service requirement. Short-TTI transmission can be implemented, and data processing time and a user plane delay can be reduced. In addition, spectrum utilization can be increased.

Specifically, the second part of the first subframe may include one symbol. The quantity of symbols of the first part is equal to a total quantity of symbols of the first subframe minus the quantity of symbols of the third part and minus the quantity of symbols of the second part.

In this example, the base station indicates the subframe structure of the first subframe to the user equipment by using the downlink information, so that the user equipment can transmit information by using the subframe structure of the default subframe or the new subframe structure type 2. If the default subframe is a downlink subframe, when the base station determines that there is an uplink low-latency service, the base station may instruct, by using the downlink information, the user equipment to transmit data by using the new subframe structure type 2. Therefore, a transmission opportunity can be quickly obtained for the uplink low-latency service, and because short-TTI transmission is used, the user plane delay can be reduced. In view of the above, the base station and the user equipment can determine the frame structure of the serving cell according to an actual service requirement, and can provide a low-latency service for a user. In addition, different TTI lengths may be set according to an uplink low-latency service requirement to transmit an uplink service, to improve spectral efficiency.

It should be noted that, in the foregoing descriptions, different values corresponding to the downlink information correspond to the quantity of symbols of the third part. Optionally, different values corresponding to the downlink information may correspond to the quantity of symbols of the first part. In this case, the quantity of symbols of the third part is equal to a total quantity of symbols of the first subframe minus the quantity of symbols of the first part and minus the quantity of symbols of the second part. Specifically:

When the downlink information corresponds to a third value, the first subframe is a default subframe, the subframe structure of the first subframe is a subframe structure of the default subframe, and the default subframe is a downlink subframe or an uplink subframe.

When the downlink information corresponds to a fourth value, the subframe structure of the first subframe includes three parts. A first part is a symbol used for downlink transmission, a second part is a guard period, a third part is a symbol used for uplink transmission, and a quantity of symbols corresponding to the first part is a first quantity of symbols.

When the downlink information corresponds to a fifth value, the subframe structure of the first subframe includes three parts. A first part is a symbol used for downlink transmission, a second part is a guard period, a third part is a symbol used for uplink transmission, and a quantity of symbols corresponding to the first part is a second quantity of symbols.

When the downlink information corresponds to a sixth value, the subframe structure of the first subframe includes three parts. A first part is a symbol used for downlink transmission, a second part is a guard period, a third part is a symbol used for uplink transmission, and a quantity of symbols corresponding to the first part is a third quantity of symbols.

It should be noted that when the downlink information corresponds to the sixth value, the sixth value is meaningless and is a reserved bit.

Other descriptions and related advantageous effects are similar to the case in which the different values corresponding to the downlink information correspond to the quantity of symbols of the third part, and details are not described herein again.

Example 3:

The subframe structure of the first subframe includes three parts. A first part is a symbol used for downlink transmission, a second part is a guard period, and a third part is a symbol used for uplink transmission. Specifically:

When the downlink information corresponds to a seventh value, a quantity of symbols corresponding to the third part is a fourth quantity of symbols.

When the downlink information corresponds to an eighth value, a quantity of symbols corresponding to the third part is a fifth quantity of symbols.

When the downlink information corresponds to a ninth value, a quantity of symbols corresponding to the third part is a sixth quantity of symbols. When the downlink information corresponds to a tenth value, a quantity of symbols corresponding to the third part is a seventh quantity of symbols.

Optionally, the fourth quantity of symbols is 1, the fifth quantity of symbols is 2, the sixth quantity of symbols is 4, and the seventh quantity of symbols is 6.

Specifically, the downlink information may correspond to two bits. In this case, the seventh value may be 00, the eighth value may be 01, the ninth value may be 10, and the tenth value may be 11.

Optionally, the fourth quantity of symbols, the fifth quantity of symbols, the sixth quantity of symbols, and the seventh quantity of symbols may be configured by using higher layer signaling or predefined.

Specifically, the second part of the first subframe may include one symbol. The quantity of symbols of the first part is equal to a total quantity of symbols of the first subframe minus the quantity of symbols of the third part and minus the quantity of symbols of the second part.

In this example, when the downlink information corresponds to the seventh value, the eighth value, the ninth value, or the tenth value, the quantities of symbols of the third part are different. When the downlink information corresponds to the seventh value, a typical application scenario may be that an LTE system does not have a short-TTI service transmission requirement, and uplink control information can be quickly fed back by using the third part. Spectral efficiency of the system is improved, a short HARQ RTT is ensured, and a user plane delay is reduced. When the downlink information corresponds to the eighth value, a typical application scenario may be that an LTE system has a downlink short-TTI service transmission requirement. Using the third part to feed back uplink control information may feed back more bits of a HARQ-ACK. For example, a HARQ-ACK corresponding to two PDSCHs using short-TTI transmission may be fed back, so that a serving cell can enable short-TTI PDSCH transmission. A downlink user plane delay can be reduced and a downlink low-latency service can be provided. When the downlink information corresponds to the ninth value and the tenth value, a typical application scenario is that an LTE system has an uplink short-TTI service requirement. In this case, uplink transmission is performed by using the third part, so that a transmission opportunity can be quickly obtained for uplink transmission and a user plane delay can be reduced. In addition, the first subframe corresponding to the ninth value or the tenth value may be selected according to the uplink short-TTI service requirement to transmit data. The used first subframe may be determined according to an actual service requirement, so that short-TTI transmission can be enabled, data processing time can be reduced, the user plane delay can be reduced, the actual service requirement can be better matched, and spectrum utilization can be increased.

It should be noted that, in the foregoing descriptions, different values corresponding to the downlink information correspond to the quantity of symbols of the third part. Optionally, different values corresponding to the downlink information may correspond to the quantity of symbols of the first part. In this case, the quantity of symbols corresponding to the third part is equal to a total quantity of symbols of the first subframe minus a quantity of symbols corresponding to the first part and minus a quantity of symbols corresponding to the second part. Specifically:

When the downlink information corresponds to a seventh value, the quantity of symbols corresponding to the first part is a fourth quantity of symbols.

When the downlink information corresponds to an eighth value, the quantity of symbols corresponding to the first part is a fifth quantity of symbols.

When the downlink information corresponds to a ninth value, the quantity of symbols corresponding to the first part is a sixth quantity of symbols.

When the downlink information corresponds to a tenth value, the quantity of symbols corresponding to the first part is a seventh quantity of symbols.

Other descriptions and related advantageous effects are similar to the case in which the different values corresponding to the downlink information correspond to the quantity of symbols of the third part, and details are not described herein again.

Example 4:

When the downlink information corresponds to an eleventh value, the first subframe is a default subframe, the subframe structure of the first subframe is a subframe structure of the default subframe, and the default subframe is a downlink subframe or an uplink subframe.

When the downlink information corresponds to a twelfth value, the subframe structure of the first subframe includes three parts. A first part is a symbol used for downlink transmission, a second part is a guard period, and a third part is a symbol used for uplink transmission.

Specifically, the downlink information may be carried in a downlink control information format. The downlink information may correspond to two bits. In this case, the eleventh value may be 00, and the twelfth value may be 01; or the eleventh value is 10, and the twelfth value is 11. In addition, the downlink information may correspond to one bit. In this case, the eleventh value may be 0 (or 1), and the twelfth value may be 1 (or 0).

The default subframe may be a downlink subframe, that is, all symbols in the default subframe are used for downlink transmission. The default subframe may be an uplink subframe, that is, all symbols in the default subframe are used for uplink transmission. The default subframe may be a first special subframe. The first special subframe includes three parts. A first part is a symbol used for downlink transmission, a second part is a guard period, and a third part is a symbol used for uplink control information and/or sounding reference signal (Sounding Reference Signal, SRS for short) transmission. Both the quantity of symbols of the third part and a quantity of symbols of the second part may be 1. The subframe structure of the default subframe may be a predefined subframe structure.

Specifically, after it is determined that the first subframe is the default subframe, whether the default subframe is an uplink subframe or a downlink subframe may further be determined according to an uplink-downlink configuration.

For example, the quantity of symbols of the third part may be 2, 5, or 6, the quantity of symbols of the second part may be 1, and a quantity of symbols of the first part may be equal to a total quantity of symbols of the first subframe minus the quantity of symbols of the third part and minus the quantity of symbols of the second part.

When the quantity of symbols of the third part is 2, the third part may be used for transmitting uplink control information. The uplink control information is carried on an uplink control channel, and the uplink control channel occupies two symbols. Optionally, when the uplink control information is a HARQ-ACK, the HARQ-ACK may correspond to at least two PDSCHs using short-TTI transmission.

When the downlink information corresponds to the twelfth value, the subframe structure corresponding to the first subframe may be referred to as a new subframe structure type 3. When the quantity of symbols corresponding to the third part is 5 or 6, the new subframe structure type 3 includes both a symbol used for downlink transmission and a symbol used for uplink transmission, so that a transmission opportunity can be quickly obtained for downlink transmission or uplink transmission and a user plane delay can be reduced. On the other hand, in the new subframe structure type 3, the quantity of symbols occupied by the first part and the third part is approximately equal to a length corresponding to a half subframe. If downlink data transmission is performed in the first part or uplink data transmission is performed in the third part, short-TTI transmission can be implemented. The short-TTI transmission can reduce data processing time and a user plane delay.

In this case, the base station may use the downlink information to indicate the subframe structure of the first subframe to the user equipment, so that the user equipment can send and receive information by using the subframe structure of the default subframe or the new subframe structure type 3, and the base station may determine a frame structure of a serving cell according to an actual service requirement. For example, if the default subframe is a downlink subframe, when an LTE system has an uplink low-latency service, the base station may instruct, by using the downlink information, the user equipment to use the new subframe structure type 3 to send and receive information. In this way, a transmission opportunity can be quickly obtained for an uplink low-latency service, and because short-TTI transmission is used, a user plane delay can be reduced.

In this example, by introducing a concept of the first subframe, a subframe used for downlink transmission can be used to feed back a HARQ-ACK. Therefore, a HARQ RTT can be improved and a user plane delay can be reduced. In addition, because the HARQ-ACK can be quickly fed back, the LTE system can adjust a scheduling algorithm according to the fed back HARQ-ACK to improve spectral efficiency. On the other hand, when the quantity of symbols of the third part of the first subframe is 2, using the third part to feed back uplink control information may feed back more bits of a HARQ-ACK (for example, a HARQ-ACK corresponding to two PDSCHs using short-TTI transmission may be fed back), so that short-TTI PDSCH transmission can be performed in the serving cell. A downlink user plane delay can be reduced and a downlink low-latency service can be provided. In addition, the base station sends the downlink information to the user equipment, so that the user equipment may send and receive information by using the first special subframe or the new subframe structure type 3. When an actual service has no low latency requirement, the user equipment and the base station may send and receive information by using the first special subframe. When the actual service has a low latency requirement, the user equipment and the base station may send and receive information by using the new subframe structure type 3. Therefore, a quantity of symbols, in the first subframe, used for transmitting an uplink control channel can be determined according to whether there is a downlink low-latency service requirement, and resources are not wasted while ensuring performance of the uplink control information.

It should be noted that, in the foregoing embodiment, when the user equipment needs to send a PUCCH in the first subframe, and the third part of the first subframe may also be used for uplink data transmission, a quantity of symbols occupied by the PUCCH may be consistent with the quantity of symbols of the third part, or may be a fixed value. For example, the PUCCH permanently occupies one symbol or two symbols.

It should be noted that, a symbol in all the embodiments of the present invention may be a single-carrier frequency-division multiple access (Single-carrier Frequency-Division Multiple Access, SC-FDMA for short) symbol, or may be an orthogonal frequency division multiplexing (Orthogonal Frequency Division Multiplexing, OFDM for short) symbol. In all the embodiments of the present invention, a length of one symbol includes a sum of a length of a valid symbol and a cyclic prefix.

An embodiment of the present invention further provides a method for sending and receiving information, as shown in FIG. 3. The method includes the following steps.

301: A base station determines a subframe structure of a first subframe and sends downlink information to user equipment.

Specifically, the downlink information is used to instruct the user equipment to determine the subframe structure of the first subframe according to the downlink information.

Optionally, the downlink information may be carried in a downlink control information format. The downlink control information format may be the downlink control information format in any one of the foregoing examples 1 to 3. For details, refer to the foregoing descriptions, and details are not described herein again.

302: The base station determines a frame structure of a serving cell of the user equipment according to the subframe structure of the first subframe.

The base station further determines the frame structure of the serving cell according to the determined subframe structure of the first subframe. For example, specifically, the user equipment may further determine a subframe structure of each subframe in a radio frame of the serving cell. It should be noted that the user equipment and the base station use a same method to determine the frame structure of the serving cell according to the subframe structure of the first subframe, that is, the frame structure of the serving cell determined by the user equipment according to the subframe structure of the first subframe is the same as that determined by the base station.

303: The base station sends information to the user equipment in the serving cell according to the determined frame structure of the serving cell, and receives, in the serving cell according to the determined frame structure of the serving cell, information sent by the user equipment.

Transmitting, by the base station, information in the serving cell according to the determined frame structure of the serving cell may specifically be sending information to the user equipment and receiving information sent by the user equipment. The information transmission herein may refer to all information transmission performed based on the frame structure. For example, downlink may include PDSCH transmission, PDCCH transmission, PHICH transmission, downlink reference signal transmission, and the like. Uplink may include PUSCH transmission, PUCCH transmission, uplink reference signal transmission, and the like.

When the base station needs to receive, in the first subframe, a PUCCH sent by the user equipment, and a third part of the first subframe may also be used for uplink data transmission, a quantity of symbols occupied by the PUCCH may be consistent with a quantity of symbols of the third part, or may be a fixed value. For example, the PUCCH permanently occupies one symbol or two symbols.

According to the method provided in this embodiment of the present invention, after determining the subframe structure of the first subframe, the base station sends the downlink information to the user equipment to enable the user equipment to determine the subframe structure of the first subframe. The base station and the user equipment further determine the frame structure of the serving cell according to the subframe structure of the first subframe, and transmit information in the serving cell according to the determined frame structure of the serving cell. The base station may adjust the frame structure of the first subframe by using dynamic signaling. Therefore, the base station may determine a used frame structure of the first subframe according to an actual service requirement. For example, in a case of a low-latency service, a determined subframe structure of a first subframe can meet a requirement of the low-latency service, and therefore user experience can be improved.

Optionally, the subframe structure of the first subframe is different when the downlink information corresponds to a different value. Specifically, a correspondence between a value corresponding to the downlink information and the first subframe may be a correspondence described in any one of the following four examples:

Example 1:

When the downlink information corresponds to a first value, the first subframe is a default subframe, the subframe structure of the first subframe is a subframe structure of the default subframe, and the default subframe is a downlink subframe or an uplink subframe.

When the downlink information corresponds to a second value, the subframe structure of the first subframe includes three parts. A first part is a symbol used for downlink transmission, a second part is a guard period, and a third part is a symbol used for uplink transmission.

Specifically, the downlink information may correspond to two bits. In this case, the first value may be 00, and the second value may be 01; or the first value is 10, and the second value is 11. The downlink information may correspond to one bit. In this case, the first value may be 0 (or 1), and the second value may be 1 (or 0).

Optionally, a quantity of symbols corresponding to the third part is 5 or 6.

For other descriptions of the example 1, refer to the example 1 in the foregoing embodiment, and details are not described herein again.

Example 2:

When the downlink information corresponds to a third value, the first subframe is a default subframe, the subframe structure of the first subframe is a subframe structure of the default subframe, and the default subframe is a downlink subframe or an uplink subframe.

When the downlink information corresponds to a fourth value, the subframe structure of the first subframe includes three parts. A first part is a symbol used for downlink transmission, a second part is a guard period, a third part is a symbol used for uplink transmission, and a quantity of symbols corresponding to the third part is a first quantity of symbols.

When the downlink information corresponds to a fifth value, the subframe structure of the first subframe includes three parts. A first part is a symbol used for downlink transmission, a second part is a guard period, a third part is a symbol used for uplink transmission, and a quantity of symbols corresponding to the third part is a second quantity of symbols.

When the downlink information corresponds to a sixth value, the subframe structure of the first subframe includes three parts. A first part is a symbol used for downlink transmission, a second part is a guard period, a third part is a symbol used for uplink transmission, and a quantity of symbols corresponding to the third part is a third quantity of symbols.

The downlink information may be carried in a downlink control information format. The downlink information may correspond to two bits. In this case, the third value may be 00, the fourth value may be 01, the fifth value is 10, and the sixth value may be 11.

Optionally, the first quantity of symbols is 3, the second quantity of symbols is 6, and the third quantity of symbols is 9.

For other descriptions of the example 2, refer to the example 2 in the foregoing embodiment, and details are not described herein again.

Example 3:

The subframe structure of the first subframe includes three parts. A first part is a symbol used for downlink transmission, a second part is a guard period, and a third part is a symbol used for uplink transmission. Specifically:
When the downlink information corresponds to a seventh value, a quantity of symbols corresponding to the third part is a fourth quantity of symbols.

When the downlink information corresponds to an eighth value, a quantity of symbols corresponding to the third part is a fifth quantity of symbols.

When the downlink information corresponds to a ninth value, a quantity of symbols corresponding to the third part is a sixth quantity of symbols.

When the downlink information corresponds to a tenth value, a quantity of symbols corresponding to the third part is a seventh quantity of symbols.

Optionally, the fourth quantity of symbols is 1, the fifth quantity of symbols is 2, the sixth quantity of symbols is 4, and the seventh quantity of symbols is 6.

Specifically, the downlink information may correspond to two bits. In this case, the seventh value may be 00, the eighth value may be 01, the ninth value may be 10, and the tenth value may be 11.

For other descriptions of the example 3, refer to the example 3 in the foregoing embodiment, and details are not described herein again.

Example 4:

When the downlink information corresponds to an eleventh value, the first subframe is a default subframe, the subframe structure of the first subframe is a subframe structure of the default subframe, and the default subframe is a downlink subframe or an uplink subframe.

When the downlink information corresponds to a twelfth value, the subframe structure of the first subframe includes three parts. A first part is a symbol used for downlink transmission, a second part is a guard period, and a third part is a symbol used for uplink transmission.

Specifically, the downlink information may be carried in a downlink control information format. The downlink information may correspond to two bits. In this case, the eleventh value may be 00, and the twelfth value may be 01; or the eleventh value is 10, and the twelfth value is 11. In addition, the downlink information may correspond to one bit. In this case, the eleventh value may be 0 (or 1), and the twelfth value may be 1 (or 0).

Optionally, the quantity of symbols of the third part may be 2, 5, or 6.

For other descriptions of the example 4, refer to the example 4 in the foregoing embodiment, and details are not described herein again.

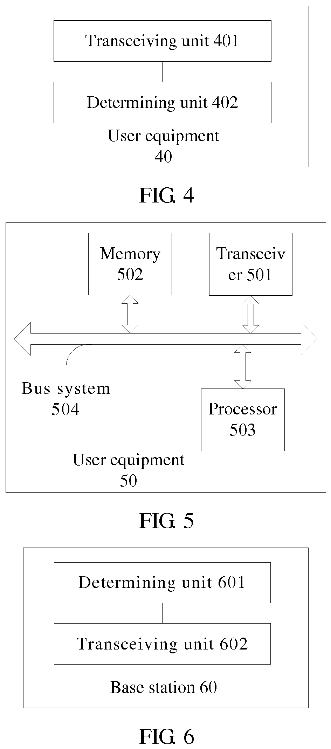

An embodiment of the present invention further provides user equipment 40, configured to execute the foregoing method. As shown in FIG. 4, the user equipment 40 includes:

a transceiving unit 401, configured to receive downlink information; and
a determining unit 402, configured to determine a subframe structure of a first subframe according to the downlink information; and determine a frame structure of a serving cell according to the subframe structure of the first subframe.

The transceiving unit 401 is further configured to send and receive information in the serving cell according to the determined frame structure of the serving cell.

Optionally, the subframe structure of the first subframe is different when the downlink information corresponds to a different value.

Optionally, when the downlink information corresponds to a first value, the first subframe is a default subframe, the subframe structure of the first subframe is a subframe structure of the default subframe, and the default subframe is a downlink subframe or an uplink subframe.

When the downlink information corresponds to a second value, the subframe structure of the first subframe includes three parts. A first part is a symbol used for downlink transmission, a second part is a guard period GP, and a third part is a symbol used for uplink transmission.

Optionally, a quantity of symbols corresponding to the third part is 5 or 6.

Optionally, when the downlink information corresponds to a third value, the first subframe is a default subframe, the subframe structure of the first subframe is a subframe structure of the default subframe, and the default subframe is a downlink subframe or an uplink subframe.

When the downlink information corresponds to a fourth value, the subframe structure of the first subframe includes three parts. A first part is a symbol used for downlink transmission, a second part is a guard period GP, a third part is a symbol used for uplink transmission, and a quantity of symbols corresponding to the third part is a first quantity of symbols.

When the downlink information corresponds to a fifth value, the subframe structure of the first subframe includes three parts. A first part is a symbol used for downlink transmission, a second part is a guard period GP, a third part is a symbol used for uplink transmission, and a quantity of symbols corresponding to the third part is a second quantity of symbols.

When the downlink information corresponds to a sixth value, the subframe structure of the first subframe includes three parts. A first part is a symbol used for downlink transmission, a second part is a guard period GP, a third part is a symbol used for uplink transmission, and a quantity of symbols corresponding to the third part is a third quantity of symbols.

Optionally, the first quantity of symbols is 3, the second quantity of symbols is 6, and the third quantity of symbols is 9.

Optionally, that the subframe structure of the first subframe is different when the downlink information corresponds to a different value includes:

the subframe structure of the first subframe includes three parts, where a first part is a symbol used for downlink transmission, a second part is a guard period GP, and a third part is a symbol used for uplink transmission; and
when the downlink information corresponds to a different value, a quantity of symbols corresponding to the third part is different.

Optionally, when the downlink information corresponds to a seventh value, the quantity of symbols corresponding to the third part is a fourth quantity of symbols.

When the downlink information corresponds to an eighth value, the quantity of symbols corresponding to the third part is a fifth quantity of symbols.

When the downlink information corresponds to a ninth value, the quantity of symbols corresponding to the third part is a sixth quantity of symbols.

When the downlink information corresponds to a tenth value, the quantity of symbols corresponding to the third part is a seventh quantity of symbols.

Optionally, the fourth quantity of symbols is 1, the fifth quantity of symbols is 2, the sixth quantity of symbols is 4, and the seventh quantity of symbols is 6.

Optionally, the fourth quantity of symbols, the fifth quantity of symbols, the sixth quantity of symbols, and the seventh quantity of symbols are configured by using higher layer signaling.

Optionally, the downlink information is carried in a downlink control information format, the downlink information corresponds to two bits, the first value is 00, and the second value is 01.

Optionally, the downlink information is carried in a downlink control information format, the downlink information corresponds to two bits, the third value is 00, the fourth value is 01, the fifth value is 10, and the sixth value is 11.

Optionally, the downlink information is carried in a downlink control information format, the downlink information corresponds to two bits, the seventh value is 00, the eighth value is 01, the ninth value is 10, and the tenth value is 11.

Optionally, the downlink information is carried in a downlink control information format, a quantity of bits corresponding to the downlink control information format is the same as a quantity of bits corresponding to a downlink control information format 1C. The downlink control information format includes I pieces of downlink information, and each of the I pieces of downlink information corresponds to N bits; $I = \left\lfloor \dfrac{L_{format\ 1C}}{N} \right\rfloor$, where $L_{format\ 1C}$ is equal to a quantity of bits corresponding to the downlink control information format 1C when the downlink control information format 1C is used to schedule one physical downlink shared channel code word. The I pieces of downlink information correspond to different serving cells, $I \geq 1$, $N \geq 1$, I and N are both integers.

Optionally, the downlink information is carried in a downlink control information format, the downlink control information format is used to schedule a physical downlink shared channel, and the first subframe is a subframe for transmitting the physical downlink shared channel.

Optionally, the downlink information is carried in a downlink control information format, the downlink control information format is used to schedule a physical downlink shared channel, and the first subframe is a subframe for transmitting hybrid automatic repeat request-acknowledgment information corresponding to the physical downlink shared channel.

Optionally, the downlink information is carried in a radio frame 1, the first subframe belongs to a radio frame 2, the radio frame 1 includes only one radio frame, the radio frame 2 includes M consecutive radio frames, $M \geq 1$, and M is an integer.

Optionally, the first radio frame in the radio frame 2 is the first radio frame after the radio frame 1.

Optionally, the downlink information is carried in R subframes in the radio frame 1, the R subframes include a subframe 0 in the radio frame 1, $R \geq 1$, and R is an integer.

Optionally, the first subframe is one or more of a subframe 3, a subframe 4, a subframe 8, or a subframe 9 in each radio frame in the radio frame 2.

The user equipment provided in this embodiment of the present invention determines the subframe structure of the first subframe according to the received downlink information sent by the base station, and the base station and the user equipment further determine the frame structure of the serving cell according to the subframe structure of the first subframe, and the user equipment transmits information in the serving cell according to the determined frame structure of the serving cell. The base station may adjust the frame structure of the first subframe by using dynamic signaling. For example, in a case of a low-latency service, a determined subframe structure of a first subframe can meet a requirement of the low-latency service. Therefore, when the user equipment transmits information in the serving cell according to the determined frame structure of the serving cell, user experience can be improved.

During hardware implementation, units in the user equipment 40 may be embedded into, in a hardware form, or configured independent of a processor of the user equipment 40, or may be stored, in a software form, in a memory of the user equipment 40, so that the processor invokes and executes an operation corresponding to each of the units. The processor may be a central processing unit (Central Processing Unit, CPU for short), a specific integrated circuit (Application Specific Integrated Circuit, ASIC for short), or one or more of integrated circuits configured to implement this embodiment of the present invention.

An embodiment of the present invention further provides user equipment 50, configured to execute the foregoing method. As shown in FIG. 5, the user equipment 50 includes a transceiver 501, a memory 502, and a processor 503.

The transceiver 501, the memory 502, and the processor 503 are coupled by using a bus system 504. The memory 502 may include a random access memory, or may include a non-volatile memory, for example, at least one magnetic disk memory. The bus system 504 may be an Industry Standard Architecture (Industry Standard Architecture, ISA for short) bus, a Peripheral Component Interconnect (Peripheral Component Interconnect, PCI for short) bus, an Extended Industry Standard Architecture (Extended Industry Standard Architecture, EISA for short) bus, or the like. The bus system 504 may be classified into an address bus, a data bus, a control bus, and the like. For ease of denotation, the bus is represented by using one thick line in FIG. 5. However, this does not indicate that there is only one bus or only one type of bus.

The transceiver 501 is configured to receive downlink information.

The memory 502 is configured to store code, and the processor 503 performs the following actions according to the code stored in the memory 502:

determining a subframe structure of a first subframe according to the downlink information; and
determining a frame structure of a serving cell according to the subframe structure of the first subframe.

The transceiver 501 is further configured to send and receive information in the serving cell according to the determined frame structure of the serving cell.

Optionally, the subframe structure of the first subframe is different when the downlink information corresponds to a different value.

Optionally, when the downlink information corresponds to a first value, the first subframe is a default subframe, the subframe structure of the first subframe is a subframe structure of the default subframe, and the default subframe is a downlink subframe or an uplink subframe.

When the downlink information corresponds to a second value, the subframe structure of the first subframe includes three parts. A first part is a symbol used for downlink transmission, a second part is a guard period GP, and a third part is a symbol used for uplink transmission.

Optionally, a quantity of symbols corresponding to the third part is 5 or 6.

Optionally, when the downlink information corresponds to a third value, the first subframe is a default subframe, the subframe structure of the first subframe is a subframe structure of the default subframe, and the default subframe is a downlink subframe or an uplink subframe.

When the downlink information corresponds to a fourth value, the subframe structure of the first subframe includes three parts. A first part is a symbol used for downlink transmission, a second part is a guard period GP, a third part is a symbol used for uplink transmission, and a quantity of symbols corresponding to the third part is a first quantity of symbols.

When the downlink information corresponds to a fifth value, the subframe structure of the first subframe includes three parts. A first part is a symbol used for downlink transmission, a second part is a guard period GP, a third part is a symbol used for uplink transmission, and a quantity of symbols corresponding to the third part is a second quantity of symbols.

When the downlink information corresponds to a sixth value, the subframe structure of the first subframe includes three parts. A first part is a symbol used for downlink transmission, a second part is a guard period GP, a third part is a symbol used for uplink transmission, and a quantity of symbols corresponding to the third part is a third quantity of symbols.

Optionally, the first quantity of symbols is 3, the second quantity of symbols is 6, and the third quantity of symbols is 9.

Optionally, that the subframe structure of the first subframe is different when the downlink information corresponds to a different value includes:

the subframe structure of the first subframe includes three parts, where a first part is a symbol used for downlink transmission, a second part is a guard period GP, and a third part is a symbol used for uplink transmission; and
when the downlink information corresponds to a different value, a quantity of symbols corresponding to the third part is different.

Optionally, when the downlink information corresponds to a seventh value, the quantity of symbols corresponding to the third part is a fourth quantity of symbols.

When the downlink information corresponds to an eighth value, the quantity of symbols corresponding to the third part is a fifth quantity of symbols.

When the downlink information corresponds to a ninth value, the quantity of symbols corresponding to the third part is a sixth quantity of symbols.

When the downlink information corresponds to a tenth value, the quantity of symbols corresponding to the third part is a seventh quantity of symbols.

Optionally, the fourth quantity of symbols is 1, the fifth quantity of symbols is 2, the sixth quantity of symbols is 4, and the seventh quantity of symbols is 6.

Optionally, the fourth quantity of symbols, the fifth quantity of symbols, the sixth quantity of symbols, and the seventh quantity of symbols are configured by using higher layer signaling.

Optionally, the downlink information is carried in a downlink control information format, the downlink information corresponds to two bits, the first value is 00, and the second value is 01.

Optionally, the downlink information is carried in a downlink control information format, the downlink information corresponds to two bits, the third value is 00, the fourth value is 01, the fifth value is 10, and the sixth value is 11.

Optionally, the downlink information is carried in a downlink control information format, the downlink information corresponds to two bits, the seventh value is 00, the eighth value is 01, the ninth value is 10, and the tenth value is 11.

Optionally, the downlink information is carried in a downlink control information format, a quantity of bits corresponding to the downlink control information format is the same as a quantity of bits corresponding to a downlink control information format 1C. The downlink control information format includes I pieces of downlink information, and each of the I pieces of downlink information corresponds to N bits; $I = \left\lfloor \dfrac{L_{format\ 1C}}{N} \right\rfloor$, where

$L_{format\ 1C}$ is equal to a quantity of bits corresponding to the downlink control information format 1C when the downlink control information format 1C is used to schedule one physical downlink shared channel code word. The I pieces of downlink information correspond to different serving cells, $I \geq 1$, $N \geq 1$, I and N are both integers.

Optionally, the downlink information is carried in a downlink control information format, the downlink control information format is used to schedule a physical downlink shared channel, and the first subframe is a subframe for transmitting the physical downlink shared channel.

Optionally, the downlink information is carried in a downlink control information format, the downlink control information format is used to schedule a physical downlink shared channel, and the first subframe is a subframe for transmitting hybrid automatic repeat request-acknowledgment information corresponding to the physical downlink shared channel.

Optionally, the downlink information is carried in a radio frame 1, the first subframe belongs to a radio frame 2, the radio frame 1 includes only one radio frame, the radio frame 2 includes M consecutive radio frames, $M \geq 1$, and M is an integer.

Optionally, the first radio frame in the radio frame 2 is the first radio frame after the radio frame 1.

Optionally, the downlink information is carried in R subframes in the radio frame 1, the R subframes include a subframe 0 in the radio frame 1, $R \geq 1$, and R is an integer.

Optionally, the first subframe is one or more of a subframe 3, a subframe 4, a subframe 8, or a subframe 9 in each radio frame in the radio frame 2.

The user equipment provided in this embodiment of the present invention determines the subframe structure of the first subframe according to the received downlink information sent by the base station, and the base station and the user equipment further determine the frame structure of the serving cell according to the subframe structure of the first subframe, and the user equipment transmits information in the serving cell according to the determined frame structure of the serving cell. The base station may adjust the frame structure of the first subframe by using dynamic signaling. For example, in a case of a low-latency service, a determined subframe structure of a first subframe can meet a requirement of the low-latency service. Therefore, when the user equipment transmits information in the serving cell according to the determined frame structure of the serving cell, user experience can be improved.

An embodiment of the present invention further provides a base station 60, configured to execute the foregoing method. As shown in FIG. 6, the base station 60 includes:

a determining unit 601, configured to determine a subframe structure of a first subframe; and
a transceiving unit 602, configured to send downlink information to user equipment, where the downlink information is used to instruct the user equipment to determine the subframe structure of the first subframe.

The determining unit 601 is further configured to determine a frame structure of a serving cell of the user equipment according to the subframe structure of the first subframe.

The transceiving unit 602 is further configured to send information to the user equipment in the serving cell according to the determined frame structure of the serving cell, and receive, in the serving cell according to the determined frame structure of the serving cell, information sent by the user equipment.

Optionally, the subframe structure of the first subframe is different when the downlink information corresponds to a different value.

Optionally, when the downlink information corresponds to a first value, the first subframe is a default subframe, the subframe structure of the first subframe is a subframe structure of the default subframe, and the default subframe is a downlink subframe or an uplink subframe.

When the downlink information corresponds to a second value, the subframe structure of the first subframe includes three parts. A first part is a symbol used for downlink transmission, a second part is a guard period GP, and a third part is a symbol used for uplink transmission.

Optionally, a quantity of symbols corresponding to the third part is 5 or 6.

Optionally, when the downlink information corresponds to a third value, the first subframe is a default subframe, the subframe structure of the first subframe is a subframe structure of the default subframe, and the default subframe is a downlink subframe or an uplink subframe.

When the downlink information corresponds to a fourth value, the subframe structure of the first subframe includes three parts. A first part is a symbol used for downlink transmission, a second part is a guard period GP, a third part is a symbol used for uplink transmission, and a quantity of symbols corresponding to the third part is a first quantity of symbols.

When the downlink information corresponds to a fifth value, the subframe structure of the first subframe includes three parts. A first part is a symbol used for downlink transmission, a second part is a guard period GP, a third part is a symbol used for uplink transmission, and a quantity of symbols corresponding to the third part is a second quantity of symbols.

When the downlink information corresponds to a sixth value, the subframe structure of the first subframe includes three parts. A first part is a symbol used for downlink transmission, a second part is a guard period GP, a third part is a symbol used for uplink transmission, and a quantity of symbols corresponding to the third part is a third quantity of symbols.

Optionally, the first quantity of symbols is 3, the second quantity of symbols is 6, and the third quantity of symbols is 9.

Optionally, that the subframe structure of the first subframe is different when the downlink information corresponds to a different value includes:

the subframe structure of the first subframe includes three parts, where a first part is a symbol used for downlink transmission, a second part is a guard period GP, and a third part is a symbol used for uplink transmission; and
when the downlink information corresponds to a different value, a quantity of symbols corresponding to the third part is different.

Optionally, when the downlink information corresponds to a seventh value, the quantity of symbols corresponding to the third part is a fourth quantity of symbols.

When the downlink information corresponds to an eighth value, the quantity of symbols corresponding to the third part is a fifth quantity of symbols.

When the downlink information corresponds to a ninth value, the quantity of symbols corresponding to the third part is a sixth quantity of symbols.

When the downlink information corresponds to a tenth value, the quantity of symbols corresponding to the third part is a seventh quantity of symbols.

Optionally, the fourth quantity of symbols is 1, the fifth quantity of symbols is 2, the sixth quantity of symbols is 4, and the seventh quantity of symbols is 6.

Optionally, the fourth quantity of symbols, the fifth quantity of symbols, the sixth quantity of symbols, and the seventh quantity of symbols are configured by using higher layer signaling.

Optionally, the downlink information is carried in a downlink control information format, the downlink information corresponds to two bits, the first value is 00, and the second value is 01.

Optionally, the downlink information is carried in a downlink control information format, the downlink information corresponds to two bits, the third value is 00, the fourth value is 01, the fifth value is 10, and the sixth value is 11.

Optionally, the downlink information is carried in a downlink control information format, the downlink information corresponds to two bits, the seventh value is 00, the eighth value is 01, the ninth value is 10, and the tenth value is 11.

Optionally, the downlink information is carried in a downlink control information format, a quantity of bits corresponding to the downlink control information format is the same as a quantity of bits corresponding to a downlink control information format 1C. The downlink control information format includes I pieces of downlink information, and each of the I pieces of downlink information corresponds to N bits; $I = \left\lfloor \dfrac{L_{format\,1C}}{N} \right\rfloor$, where $L_{format\,1C}$ is equal to a quantity of bits corresponding to the downlink control information format 1C when the downlink control information format 1C is used to schedule one physical downlink shared channel code word. The I pieces of downlink information correspond to different serving cells, $I \geq 1$, $N \geq 1$, I and N are both integers.

Optionally, the downlink information is carried in a downlink control information format, the downlink control information format is used to schedule a physical downlink shared channel, and the first subframe is a subframe for transmitting the physical downlink shared channel.

Optionally, the downlink information is carried in a downlink control information format, the downlink control information format is used to schedule a physical downlink shared channel, and the first subframe is a subframe for transmitting hybrid automatic repeat request-acknowledgment information corresponding to the physical downlink shared channel.

Optionally, the downlink information is carried in a radio frame 1, the first subframe belongs to a radio frame 2, the radio frame 1 includes only one radio frame, the radio frame 2 includes M consecutive radio frames, $M \geq 1$, and M is an integer.

Optionally, the first radio frame in the radio frame 2 is the first radio frame after the radio frame 1.

Optionally, the downlink information is carried in R subframes in the radio frame 1, the R subframes include a subframe 0 in the radio frame 1, $R \geq 1$, and R is an integer.

Optionally, the first subframe is one or more of a subframe 3, a subframe 4, a subframe 8, or a subframe 9 in each radio frame in the radio frame 2.

The base station provided in this embodiment of the present invention may send the downlink information to the user equipment, and the user equipment may determine the subframe structure of the first subframe according to the downlink information sent by the base station, further determine the frame structure of the serving cell according to the subframe structure of the first subframe, and transmit information in the serving cell according to the determined frame structure of the serving cell. The base station may adjust the frame structure of the first subframe by using dynamic signaling. Therefore, the base station may determine a used frame structure of the first subframe according to an actual service requirement. For example, in a case of a low-latency service, a determined subframe structure of a first subframe can meet a requirement of the low-latency service, and therefore when the user equipment transmits information in the serving cell according to the determined frame structure of the serving cell, a latency can be reduced and user experience can be improved.

During hardware implementation, units in the base station 60 may be embedded into, in a hardware form, or configured independent of a processor of the base station 60, or may be stored, in a software form, in a memory of the base station 60, so that the processor invokes and executes an operation corresponding to each of the units. The processor may be a CPU, an ASIC, or one or more of integrated circuits configured to implement this embodiment of the present invention.

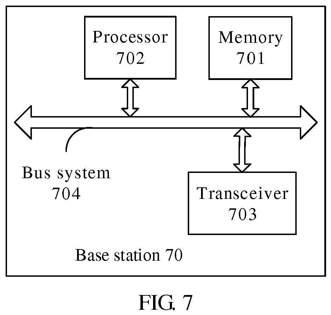

An embodiment of the present invention further provides a base station 70, configured to execute the foregoing method. As shown in FIG. 7, the base station 70 includes a memory 701, a processor 702, and a transceiver 703.

The memory 701, the processor 702, and the transceiver 703 are coupled by using a bus system 704. The memory 701 may include a random access memory, or may include a non-volatile memory, for example, at least one magnetic disk memory. The bus system 704 may be an ISA bus, a PCI bus, an EISA bus, or the like. The bus system 704 may be classified into an address bus, a data bus, a control bus, and the like. For ease of denotation, the bus is represented by using one thick line in FIG. 7. However, this does not indicate that there is only one bus or only one type of bus.

The memory 701 is configured to store code, and the processor 702 performs the following action according to the code stored in the memory 701: determining a subframe structure of a first subframe.

The transceiver 703 is configured to send downlink information to user equipment, where the downlink information is used to instruct the user equipment to determine the subframe structure of the first subframe according to the downlink information.

The processor 702 is further configured to determine a frame structure of a serving cell of the user equipment according to the subframe structure of the first subframe.

The transceiver 703 is further configured to send information to the user equipment in the serving cell according to the determined frame structure of the serving cell, and receive, in the serving cell according to the determined frame structure of the serving cell, information sent by the user equipment.

Optionally, the subframe structure of the first subframe is different when the downlink information corresponds to a different value.

Optionally, when the downlink information corresponds to a first value, the first subframe is a default subframe, the subframe structure of the first subframe is a subframe structure of the default subframe, and the default subframe is a downlink subframe or an uplink subframe.

When the downlink information corresponds to a second value, the subframe structure of the first subframe includes three parts. A first part is a symbol used for downlink transmission, a second part is a guard period GP, and a third part is a symbol used for uplink transmission.

Optionally, a quantity of symbols corresponding to the third part is 5 or 6.

Optionally, when the downlink information corresponds to a third value, the first subframe is a default subframe, the subframe structure of the first subframe is a subframe structure of the default subframe, and the default subframe is a downlink subframe or an uplink subframe.

When the downlink information corresponds to a fourth value, the subframe structure of the first subframe includes three parts. A first part is a symbol used for downlink transmission, a second part is a guard period GP, a third part is a symbol used for uplink transmission, and a quantity of symbols corresponding to the third part is a first quantity of symbols.

When the downlink information corresponds to a fifth value, the subframe structure of the first subframe includes three parts. A first part is a symbol used for downlink transmission, a second part is a guard period GP, a third part is a symbol used for uplink transmission, and a quantity of symbols corresponding to the third part is a second quantity of symbols.

When the downlink information corresponds to a sixth value, the subframe structure of the first subframe includes three parts. A first part is a symbol used for downlink transmission, a second part is a guard period GP, a third part is a symbol used for uplink transmission, and a quantity of symbols corresponding to the third part is a third quantity of symbols.

Optionally, the first quantity of symbols is 3, the second quantity of symbols is 6, and the third quantity of symbols is 9.

Optionally, that the subframe structure of the first subframe is different when the downlink information corresponds to a different value includes:

the subframe structure of the first subframe includes three parts, where a first part is a symbol used for downlink transmission, a second part is a guard period GP, and a third part is a symbol used for uplink transmission; and
when the downlink information corresponds to a different value, a quantity of symbols corresponding to the third part is different.

Optionally, when the downlink information corresponds to a seventh value, the quantity of symbols corresponding to the third part is a fourth quantity of symbols.

When the downlink information corresponds to an eighth value, the quantity of symbols corresponding to the third part is a fifth quantity of symbols.

When the downlink information corresponds to a ninth value, the quantity of symbols corresponding to the third part is a sixth quantity of symbols.

When the downlink information corresponds to a tenth value, the quantity of symbols corresponding to the third part is a seventh quantity of symbols.

Optionally, the fourth quantity of symbols is 1, the fifth quantity of symbols is 2, the sixth quantity of symbols is 4, and the seventh quantity of symbols is 6.

Optionally, the fourth quantity of symbols, the fifth quantity of symbols, the sixth quantity of symbols, and the seventh quantity of symbols are configured by using higher layer signaling.

Optionally, the downlink information is carried in a downlink control information format, the downlink information corresponds to two bits, the first value is 00, and the second value is 01.

Optionally, the downlink information is carried in a downlink control information format, the downlink information corresponds to two bits, the third value is 00, the fourth value is 01, the fifth value is 10, and the sixth value is 11.

Optionally, the downlink information is carried in a downlink control information format, the downlink information corresponds to two bits, the seventh value is 00, the eighth value is 01, the ninth value is 10, and the tenth value is 11.

Optionally, the downlink information is carried in a downlink control information format, a quantity of bits corresponding to the downlink control information format is the same as a quantity of bits corresponding to a downlink control information format 1C. The downlink control information format includes I pieces of downlink information, and each of the I pieces of downlink information corresponds to N bits; $I = \left\lfloor \dfrac{L_{format\ 1C}}{N} \right\rfloor$, where $L_{format\ 1C}$ is equal to a quantity of bits corresponding to the downlink control information format 1C when the downlink control information format 1C is used to schedule one physical downlink shared channel code word. The I pieces of downlink information correspond to different serving cells, I≥1, N≥1, I and N are both integers.

Optionally, the downlink information is carried in a downlink control information format, the downlink control information format is used to schedule a physical downlink shared channel, and the first subframe is a subframe for transmitting the physical downlink shared channel.

Optionally, the downlink information is carried in a downlink control information format, the downlink control information format is used to schedule a physical downlink shared channel, and the first subframe is a subframe for transmitting hybrid automatic repeat request-acknowledgment information corresponding to the physical downlink shared channel.

Optionally, the downlink information is carried in a radio frame 1, the first subframe belongs to a radio frame 2, the radio frame 1 includes only one radio frame, the radio frame 2 includes M consecutive radio frames, M≥1, and M is an integer.

Optionally, the first radio frame in the radio frame 2 is the first radio frame after the radio frame 1.

Optionally, the downlink information is carried in R subframes in the radio frame 1, the R subframes include a subframe 0 in the radio frame 1, R≥1, and R is an integer.

Optionally, the first subframe is one or more of a subframe 3, a subframe 4, a subframe 8, or a subframe 9 in each radio frame in the radio frame 2.

The base station provided in this embodiment of the present invention may send the downlink information to the user equipment, and the user equipment may determine the subframe structure of the first subframe according to the downlink information sent by the base station, further determine the frame structure of the serving cell according to the subframe structure of the first subframe, and transmit information in the serving cell according to the determined frame structure of the serving cell. The base station may adjust the frame structure of the first subframe by using dynamic signaling. Therefore, the base station may determine a used frame structure of the first subframe according to an actual service requirement. For example, in a case of a low-latency service, a determined subframe structure of a first subframe can meet a requirement of the low-latency service, and therefore when the user equipment transmits information in the serving cell according to the determined frame structure of the serving cell, a latency can be reduced and user experience can be improved.

An embodiment of the present invention further provides a system for sending and receiving information. The system includes the user equipment 40 and the base station 60 provided in the foregoing embodiments, or the user equipment 50 and the base station 70 provided in the foregoing embodiment.

It should be noted that, corresponding to the foregoing methods provided in the embodiments of the present invention, the apparatuses (including the base station and the user equipment) are applicable to an LTE system or an LTE-Advanced system, for example, are applicable to a single-carrier scenario and a carrier aggregation scenario in an LTE system or an LTE-Advanced system.

In the several embodiments provided in this application, it should be understood that the disclosed apparatus and method may be implemented in other manners. For example, the described apparatus embodiment is merely exemplary. For example, the module division is merely logical function division and may be other division in actual implementation. For example, a plurality of modules or components may be combined or integrated into another system, or some features may be ignored or not performed.

The modules described as separate parts may or may not be physically separate, and parts displayed as modules may or may not be physical modules, may be located in one position, or may be distributed on a plurality of network units. Some or all of the units may be selected according to actual requirements to achieve the objectives of the solutions of the embodiments.

In addition, functional modules in the embodiments of the present invention may be integrated into one processing module, or two or more modules are integrated into one module. The integrated module may be implemented in a form of hardware, or may be implemented in a form of hardware in addition to a software functional module.

When the foregoing integrated module is implemented in a form of a software functional module, the integrated unit may be stored in a computer-readable storage medium. The software functional module is stored in a storage medium and includes several instructions for instructing a computer device (which may be a personal computer, a server, or a network device) to perform some of the steps of the methods described in the embodiments of the present invention. The foregoing storage medium includes: any medium that can store program code, such as a USB flash drive, a removable hard disk, a read-only memory (Read-Only Memory, ROM for short), a random access memory (Random Access Memory, RAM for short), a magnetic disk, or an optical disc.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of this application.

**Claims**

1. A method for sending and receiving information, comprising:

   receiving (101), by user equipment, downlink information;
   determining (102), by the user equipment, a subframe structure of a first subframe according to the downlink information;
   determining (103), by the user equipment, a frame structure of a serving cell according to the subframe structure of the first subframe; and
   sending and receiving (104), by the user equipment, information in the serving cell according to the determined frame structure of the serving cell.

2. The method according to claim 1, wherein the subframe structure of the first subframe is different when the downlink information corresponds to a different value.

3. The method according to claim 1 or 2, wherein:

   the subframe structure of the first subframe comprises three parts, wherein a first part is a symbol used for downlink transmission, a second part is a guard period, GP, and a third part is a symbol used for uplink transmission; and
   when the downlink information corresponds to a different value, a quantity of symbols corresponding to the third part is different.

4. The method according to claim 3, wherein:

   when the downlink information corresponds to a seventh value, the quantity of symbols corresponding to the third part is a fourth quantity of symbols;
   when the downlink information corresponds to an eighth value, the quantity of symbols corresponding to the third part is a fifth quantity of symbols;
   when the downlink information corresponds to a ninth value, the quantity of symbols corresponding to the third part is a sixth quantity of symbols; or
   when the downlink information corresponds to a tenth value, the quantity of symbols corresponding to the third part is a seventh quantity of symbols.

5. The method according to claim 4, wherein the fourth quantity of symbols is 1, the fifth quantity of symbols is 2, the sixth quantity of symbols is 4, and the seventh quantity of symbols is 6.

6. The method according to claim 4, wherein the fourth quantity of symbols, the fifth quantity of symbols, the sixth quantity of symbols, and the seventh quantity of symbols are configured by using higher layer signaling.

7. A method for sending and receiving information, comprising:

   determining (301), by a base station, a subframe structure of a first subframe;
   sending (301), by the base station, downlink information to user equipment, wherein the downlink information is used to indicate the subframe structure of the first subframe;
   determining (302), by the base station, a frame structure of a serving cell of the user equipment according to the subframe structure of the first subframe; and
   sending (303), by the base station, information to the user equipment in the serving cell according to the determined frame structure of the serving cell, and receiving (303), in the serving cell according to the determined frame structure of the serving cell, information sent by the user equipment.

8. User equipment (40), comprising: a transceiving unit (401) and a determining unit (402), wherein:

the transceiving unit (401) is configured to receive downlink information;
the determining unit (402) is configured to determine a subframe structure of a first subframe according to the downlink information, and determining a frame structure of a serving cell according to the subframe structure of the first subframe;
the transceiving unit (401) is further configured to send and receive information in the serving cell according to the determined frame structure of the serving cell.

9. The user equipment according to claim 8, wherein the subframe structure of the first subframe is different when the downlink information corresponds to a different value.

10. The user equipment according to claim 8 or 9, wherein:

the subframe structure of the first subframe comprises three parts, wherein a first part is a symbol used for downlink transmission, a second part is a guard period, GP, and a third part is a symbol used for uplink transmission; and
when the downlink information corresponds to a different value, a quantity of symbols corresponding to the third part is different.

11. The user equipment according to claim 10, wherein:

when the downlink information corresponds to a seventh value, the quantity of symbols corresponding to the third part is a fourth quantity of symbols;
when the downlink information corresponds to an eighth value, the quantity of symbols corresponding to the third part is a fifth quantity of symbols;
when the downlink information corresponds to a ninth value, the quantity of symbols corresponding to the third part is a sixth quantity of symbols; or
when the downlink information corresponds to a tenth value, the quantity of symbols corresponding to the third part is a seventh quantity of symbols.

12. The user equipment according to claim 11, wherein the fourth quantity of symbols is 1, the fifth quantity of symbols is 2, the sixth quantity of symbols is 4, and the seventh quantity of symbols is 6.

13. The user equipment according to claim 11, wherein the fourth quantity of symbols, the fifth quantity of symbols, the sixth quantity of symbols, and the seventh quantity of symbols are configured by using higher layer signaling.

14. Abase station (60), comprising: a determining unit (601) and a transceiving unit (602), wherein:

the determining unit (601) is configured to determine a subframe structure of a first subframe;
the transceiving unit (602) is configured to send downlink information to user equipment, wherein the downlink information is used to indicate the subframe structure of the first subframe;
the determining unit (601) is further configured to determine a frame structure of a serving cell of the user equipment according to the subframe structure of the first subframe; and
the transceiving unit (602) is further configured to send information to the user equipment in the serving cell according to the determined frame structure of the serving cell, and receive, in the serving cell according to the determined frame structure of the serving cell, information sent by the user equipment.

15. A computer-readable medium comprising instructions which, when executed by a computer, cause the computer to carry out the method of any one of claims 1 to 6, or the method of claim 7.

**Patentansprüche**

1. Verfahren zum Senden und Empfangen von Informationen, umfassend:

Empfangen (101), durch das Benutzergerät, von Downlink-Informationen;
Bestimmen (102), durch das Benutzergerät, einer Subframe-Struktur eines ersten Subframes in Abhängigkeit von den Downlink-Informationen;
Bestimmen (103), durch das Benutzergerät, einer Frame-Struktur einer bedienenden Zelle in Abhängigkeit von der Subframe-Struktur des ersten Subframes; und
Senden und Empfangen (104), durch das Benutzergerät, von Informationen in der bedienenden Zelle entsprechend der bestimmten Frame-Struktur der bedienenden Zelle.

2. Verfahren nach Anspruch 1, wobei die Subframe-Struktur des ersten Subframes anders ist, wenn die Downlink-Informationen einem anderen Wert entsprechen.

3. Verfahren nach Anspruch 1 oder 2, wobei:

die Subframe-Struktur des ersten Subframes drei Teile umfasst, wobei ein erster Teil ein Symbol ist, das für die Downlink-Übertragung verwendet wird, ein zweiter Teil ein Schutzzeitraum, GP, ist und ein dritter Teil ein Symbol ist, das für die Uplink-Übertragung verwendet wird; und
dann, wenn die Downlink-Informationen einem anderen Wert entsprechen, die Anzahl der Symbole, die dem dritten Teil entsprechen, anders ist.

4. Verfahren nach Anspruch 3, wobei dann:

wenn die Downlink-Information einem siebten Wert entsprechen, die Anzahl der Symbole, die dem dritten Teil entsprechen, eine vierte Anzahl von Symbolen ist;
wenn die Downlink-Informationen einem achten Wert entsprechen, die Anzahl der Symbole, die dem dritten Teil entsprechen, eine fünfte Anzahl von Symbolen ist;
wenn die Downlink-Informationen einem neunten Wert entsprechen, die Anzahl der Symbole, die dem dritten Teil entsprechen, eine sechste Anzahl von Symbolen ist; oder
wenn die Downlink-Informationen einem zehnten Wert entsprechen, die Anzahl der Symbole, die dem dritten Teil entsprechen, eine siebte Anzahl von Symbolen ist.

5. Verfahren nach Anspruch 4, wobei die vierte Anzahl von Symbolen 1 ist, die fünfte Anzahl von Symbolen 2 ist, die sechste Anzahl von Symbolen 4 ist und die siebte Anzahl von Symbolen 6 ist.

6. Verfahren nach Anspruch 4, wobei die vierte Anzahl von Symbolen, die fünfte Anzahl von Symbolen, die sechste Anzahl von Symbolen und die siebte Anzahl von Symbolen durch Signalisierung auf höherer Ebene konfiguriert werden.

7. Verfahren zum Senden und Empfangen von Informationen, umfassend:

Bestimmen (301), durch eine Basisstation, einer Subframe-Struktur eines ersten Subframes;
Senden (301), durch die Basisstation, von Downlink-Informationen an ein Benutzergerät, wobei die Downlink-Informationen verwendet werden, um die Subframe-Struktur des ersten Subframes anzuzeigen;
Bestimmen (302), durch die Basisstation, einer Frame-Struktur einer bedienenden Zelle des Benutzergeräts in Abhängigkeit von der Subframe-Struktur des ersten Subframes und Senden (303), durch die Basisstation, von Informationen an das Benutzergerät in der bedienenden Zelle entsprechend der bestimmten Frame-Struktur der bedienenden Zelle und Empfangen (303), in der bedienenden Zelle entsprechend der bestimmten Frame-Struktur der bedienenden Zelle, von Informationen, die durch das Benutzergerät gesendet werden.

8. Benutzergerät (40), umfassend:
eine Sende-/Empfangseinheit (401) und eine Bestimmungseinheit (402), wobei:

die Sende-/Empfangseinheit (401) dazu konfiguriert ist, Downlink-Informationen zu empfangen;
die Bestimmungseinheit (402) dazu konfiguriert ist, eine Subframe-Struktur eines ersten Subframes in Abhängigkeit von den Downlink-Informationen zu bestimmen und eine Frame-Struktur einer bedienenden Zelle in Abhängigkeit von der Subframe-Struktur des ersten Subframes zu bestimmen;
die Sende-/Empfangseinheit (401) ferner dazu konfiguriert ist, Informationen in der bedienenden Zelle entsprechend der bestimmten Frame-Struktur der bedienenden Zelle zu senden und zu empfangen.

9. Benutzergerät nach Anspruch 8, wobei die Subframe-Struktur des ersten Subframes anders ist, wenn die Downlink-Informationen einem anderen Wert entsprechen.

10. Benutzergerät nach Anspruch 8 oder 9, wobei:

die Subframe-Struktur des ersten Subframes drei Teile umfasst, wobei ein erster Teil ein Symbol ist, das für die Downlink-Übertragung verwendet wird, ein zweiter Teil ein Schutzzeitraum, GP, ist und ein dritter Teil ein Symbol ist, das für die Uplink-Übertragung verwendet wird; und
dann, wenn die Downlink-Informationen einem anderen Wert entsprechen, die Anzahl der Symbole, die dem dritten Teil entsprechen, anders ist.

11. Benutzergerät nach Anspruch 10, wobei dann:

wenn die Downlink-Information einem siebten Wert entsprechen, die Anzahl der Symbole, die dem dritten Teil entsprechen, eine vierte Anzahl von Symbolen ist;
wenn die Downlink-Informationen einem achten Wert entsprechen, die Anzahl der Symbole, die dem dritten Teil entsprechen, eine fünfte Anzahl von Symbolen ist;

wenn die Downlink-Informationen einem neunten Wert entsprechen, die Anzahl der Symbole, die dem dritten Teil entsprechen, eine sechste Anzahl von Symbolen ist; oder

wenn die Downlink-Informationen einem zehnten Wert entsprechen, die Anzahl der Symbole, die dem dritten Teil entsprechen, eine siebte Anzahl von Symbolen ist.

12. Benutzergerät nach Anspruch 11, wobei die vierte Anzahl von Symbolen 1 ist, die fünfte Anzahl von Symbolen 2 ist, die sechste Anzahl von Symbolen 4 ist und die siebte Anzahl von Symbolen 6 ist.

13. Benutzergerät nach Anspruch 11, wobei die vierte Anzahl von Symbolen, die fünfte Anzahl von Symbolen, die sechste Anzahl von Symbolen und die siebte Anzahl von Symbolen durch Signalisierung auf höherer Ebene konfiguriert werden.

14. Basisstation (60), umfassend:
eine Bestimmungseinheit (601) und eine Sende-/Empfangseinheit (602), wobei:

die Bestimmungseinheit (601) dazu konfiguriert ist, eine Subframe-Struktur eines ersten Subframes zu bestimmen;
die Sende-/Empfangseinheit (602) dazu konfiguriert ist, Downlink-Informationen an ein Benutzergerät zu senden, wobei die Downlink-Informationen verwendet werden, um die Subframe-Struktur des ersten Subframes anzuzeigen;
die Bestimmungseinheit (601) ferner dazu konfiguriert ist, eine Frame-Struktur einer bedienenden Zelle des Benutzergeräts in Abhängigkeit von der Subframe-Struktur des ersten Subframes zu bestimmen; und
die Sende-/Empfangseinheit (602) ferner dazu konfiguriert ist, Informationen an das Benutzergerät in der bedienenden Zelle entsprechend der bestimmten Frame-Struktur der bedienenden Zelle zu senden und in der bedienenden Zelle entsprechend der bestimmten Frame-Struktur der bedienenden Zelle durch das Benutzergerät gesendete Informationen zu empfangen.

15. Computerlesbares Medium, das Anweisungen umfasst, die bei ihrer Ausführung durch einen Computer bewirken, dass der Computer das Verfahren nach einem der Ansprüche 1 bis 6 oder das Verfahren nach Anspruch 7 ausführt.

## Revendications

1. Procédé d'envoi et de réception d'informations, comprenant :

la réception (101), par un équipement utilisateur, d'informations de liaison descendante ;
la détermination (102), par l'équipement utilisateur, d'une structure de sous-trame d'une première sous-trame en fonction des informations de liaison descendante ;
la détermination (103), par l'équipement utilisateur, d'une structure de trame d'une cellule de desserte en fonction de la structure de sous-trame de la première sous-trame ; et
l'envoi et la réception (104), par l'équipement utilisateur, d'informations dans la cellule de desserte en fonction de la structure de trame déterminée de la cellule de desserte.

2. Procédé selon la revendication 1, dans lequel la structure de sous-trame de la première sous-trame est différente lorsque les informations de liaison descendante correspondent à une valeur différente.

3. Procédé selon la revendication 1 ou 2, dans lequel :

la structure de sous-trame de la première sous-trame comprend trois parties, dans lequel une première partie est un symbole utilisé pour une transmission en liaison descendante, une deuxième partie est une période de garde GP et une troisième partie est un symbole utilisé pour une transmission en liaison montante ; et lorsque les informations de liaison descendante correspondent à une valeur différente, une quantité de symboles correspondant à la troisième partie est différente.

4. Procédé selon la revendication 3, dans lequel :

lorsque les informations de liaison descendante correspondent à une septième valeur, la quantité de symboles correspondant à la troisième partie est une quatrième quantité de symboles ;
lorsque les informations de liaison descendante correspondent à une huitième valeur, la quantité de symboles correspondant à la troisième partie est une cinquième quantité de symboles ;
lorsque les informations de liaison descendante correspondent à une neuvième valeur, la quantité de symboles correspondant à la troisième partie est une sixième quantité de symboles ; ou
lorsque les informations de liaison descendante correspondent à une dixième valeur, la quantité de symboles correspondant à la troisième partie est une septième quantité de symboles.

**5.** Procédé selon la revendication 4, dans lequel la quatrième quantité de symboles est 1, la cinquième quantité de symboles est 2, la sixième quantité de symboles est 4 et la septième quantité de symboles est 6.

**6.** Procédé selon la revendication 4, dans lequel la quatrième quantité de symboles, la cinquième quantité de symboles, la sixième quantité de symboles et la septième quantité de symboles sont configurées à l'aide d'une signalisation de couche supérieure.

**7.** Procédé d'envoi et de réception d'informations, comprenant :

la détermination (301), par une station de base, d'une structure de sous-trame d'une première sous-trame ;

l'envoi (301), par la station de base, d'informations de liaison descendante à l'équipement utilisateur, les informations de liaison descendante étant utilisées pour indiquer la structure de sous-trame de la première sous-trame ;

la détermination (302), par la station de base, d'une structure de trame d'une cellule de desserte de l'équipement utilisateur en fonction de la structure de sous-trame de la première sous-trame ; et

l'envoi (303), par la station de base, d'informations à l'équipement utilisateur dans la cellule de desserte en fonction de la structure de trame déterminée de la cellule de desserte, et la réception (303), dans la cellule de desserte en fonction de la structure de trame déterminée de la cellule de desserte, d'informations envoyées par l'équipement utilisateur.

**8.** Équipement utilisateur (40), comprenant :
une unité d'émission-réception (401) et une unité de détermination (402), dans lequel :

l'unité d'émission-réception (401) est configurée pour recevoir des informations de liaison descendante ;

l'unité de détermination (402) est configurée pour déterminer une structure de sous-trame d'une première sous-trame en fonction des informations de liaison descendante, et pour déterminer une structure de trame d'une cellule de desserte en fonction de la structure de sous-trame de la première sous-trame ;

l'unité d'émission-réception (401) est en outre configurée pour envoyer et recevoir des informations dans la cellule de desserte en fonction de la structure de trame déterminée de la cellule de desserte.

**9.** Équipement utilisateur selon la revendication 8, dans lequel la structure de sous-trame de la première sous-trame est différente lorsque les informations de liaison descendante correspondent à une valeur différente.

**10.** Équipement utilisateur selon la revendication 8 ou 9, dans lequel :

la structure de sous-trame de la première sous-trame comprend trois parties, dans lequel une première partie est un symbole utilisé pour une transmission en liaison descendante, une deuxième partie est une période de garde GP et une troisième partie est un symbole utilisé pour une transmission en liaison montante ; et lorsque les informations de liaison descendante correspondent à une valeur différente, une quantité de symboles correspondant à la troisième partie est différente.

**11.** Équipement utilisateur selon la revendication 10, dans lequel :

lorsque les informations de liaison descendante correspondent à une septième valeur, la quantité de symboles correspondant à la troisième partie est une quatrième quantité de symboles ;
lorsque les informations de liaison descendante correspondent à une huitième valeur, la quantité de symboles correspondant à la troisième partie est une cinquième quantité de symboles ;
lorsque les informations de liaison descendante correspondent à une neuvième valeur, la quantité de symboles correspondant à la troisième partie est une sixième quantité de symboles ; ou
lorsque les informations de liaison descendante correspondent à une dixième valeur, la quantité de symboles correspondant à la troisième partie est une septième quantité de symboles.

**12.** Équipement utilisateur selon la revendication 11, dans lequel la quatrième quantité de symboles est 1, la cinquième quantité de symboles est 2, la sixième quantité de symboles est 4 et la septième quantité de symboles est 6.

**13.** Équipement utilisateur selon la revendication 11, dans lequel la quatrième quantité de symboles, la cinquième quantité de symboles, la sixième quantité de symboles et la septième quantité de symboles sont configurées à l'aide d'une signalisation de couche supérieure.

**14.** Station de base (60), comprenant : une unité de détermination (601) et une unité d'émission-réception (602), dans laquelle :

l'unité de détermination (601) est configurée pour déterminer une structure de sous-trame d'une première sous-trame ;

l'unité d'émission-réception (602) est configurée pour envoyer des informations de liaison descendante à l'équipement utilisateur, les informations de liaison descendante étant utilisées pour indiquer la structure de sous-trame de la première sous-trame ;

l'unité de détermination (601) est en outre configurée pour déterminer une structure de trame d'une cellule de desserte de l'équipement utilisateur en fonction de la structure de sous-trame de la première sous-trame ; et

l'unité d'émission-réception (602) est en outre configurée pour envoyer des informations à l'équipement utilisateur dans la cellule de desserte en fonction de la structure de trame déterminée de la cellule de service et recevoir, dans la cellule de desserte en fonction de la structure de trame déterminée de la cellule de desserte, des informations envoyées par l'équipement utilisateur.

15. Support lisible par ordinateur comprenant des instructions qui, lorsqu'elles sont exécutées par un ordinateur, amènent l'ordinateur à exécuter le procédé selon l'une quelconque des revendications 1 à 6, ou le procédé selon la revendication 7.

| User equipment receives downlink information | 101 |
|---|---|

↓

| The user equipment determines a subframe structure of a first subframe according to the downlink information | 102 |
|---|---|

↓

| The user equipment determines a frame structure of a serving cell according to the subframe structure of the first subframe | 103 |
|---|---|

↓

| The user equipment sends and receives information in the serving cell according to the determined frame structure of the serving cell | 104 |
|---|---|

FIG. 1

Second part

First part     Third part

Symbol

FIG. 2

| A base station determines a subframe structure of a first subframe and sends downlink information to user equipment | 301 |
|---|---|

↓

| The base station determines a frame structure of a serving cell of the user equipment according to the subframe structure of the first subframe | 302 |
|---|---|

↓

| The base station sends information to the user equipment in the serving cell according to the determined frame structure of the serving cell, and receives, in the serving cell according to the determined frame structure of the serving cell, information sent by the user equipment | 303 |
|---|---|

FIG. 3

Transceiving unit 401

Determining unit 402

User equipment
40

FIG. 4

Memory
502

Transceiv
er 501

Bus system
504

Processor
503

User equipment
50

FIG. 5

Determining unit 601

Transceiving unit 602

Base station 60

FIG. 6

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2816752 A1